# EUROPÄISCHE PATENTANMELDUNG

(11) **EP 3 918 958 A1**
(43) Veröffentlichungstag der Anmeldung: **08.12.2021**
(21) Anmeldenummer: 21172510.6
(22) Anmeldetag: 06.05.2021
(51) Int. Cl.: A47J 27/21

(54) **TOPFBODENMODUL FÜR EINE KÜCHENMASCHINE**

(30) Priorität: 05.06.2020 DE 102020207073
(71) Anmelder: BSH Hausgeräte GmbH, 81739 München (DE)
(72) Erfinder: Cresnar, Mihael, 3205 Vitanje (SI); Rudez, Darko, 3230 Sentjur, Slowenien (SI); Golob, Jakob, 3330 Mozirje (SI); Zilnik, Marko, 1218 Komenda (SI); Svara, Matej, 6221 Dutovlje (SI); Holcinger, Tadej, 3220 Store (SI)

(57) **Zusammenfassung**

Ein Topfbodenmodul (100) für eine Küchenmaschine, aufweisend einen Topfboden (101), und mindestens eine Widerstandsheizungswendel (102, 103).

Erfindungsgemäß ist vorgesehen, dass die mindestens eine Widerstandsheizungswendel (102, 103) unterhalb des Topfbodens (101) angeordnet ist, wobei die mindestens eine Widerstandsheizungswendel (102, 103) in einer Platte (104) aus Aluminium angeordnet ist, welche die mindestens eine Widerstandsheizungswendel (102, 103) formschlüssig zumindest teilweise umschließt und formschlüssig mit dem Topfboden (101) verbunden ist.

Durch diese Anordnung ergibt sich beim Betrieb ein gleichmäßiges Temperaturprofil im Topfboden ohne Heiß- oder Kaltpunkte.

## Beschreibung

### Gebiet der Erfindung

Die Erfindung betrifft ein Topfbodenmodul für eine Küchenmaschine, aufweisend einen Topfboden, und mindestens eine Widerstandsheizungswendel.

### Hintergrund der Erfindung

Zum Kochen von Gargut in einer Küchenmaschine ist es bekannt, das Gargut in einem Einsatztopf der Küchenmaschine zu erhitzen. Dabei ist es üblich, Heizelemente als Teil des Einsatztopfes anzuordnen. Moderne Kochtöpfe zur Verwendung auf einem Herd sind üblicherweise auch Edelstahl gefertigt und je nach Herd weisen moderne Kochtöpfe Böden aus Kupfer auf oder sind für die Verwendung mit Induktionsherden optimiert. Die unterschiedlichen Topfböden sorgen dafür, dass der Wärmeübergang von einer Herdplatte auf den Kochtopf möglichst verlustfrei geschieht. In Kochtöpfen für Küchenmaschinen sind die Heizwendeln hingegen unmittelbar unter die Topfbodenplatte angeordnet. Durch die unmittelbare Verbindung zwischen Heizelement und Topfboden machte eine Bodenoptimierung bisher entbehrlich.

Moderne Küchenmaschinen bieten neben der reinen Koch- und Garfunktion auch die Möglichkeit, Kochgut anzubraten und sogar zu karamellisieren. Die elektrische Leistung moderner Küchenmaschinen übersteigt die Leistung gattungsgemäßer Küchenmaschinen zum Teil erheblich. Für Töpfe mit einem maximalen Volumen von 3 I sind auf einem Boden mit recht geringer Oberfläche Heizleistungen von 800 W bis 2.000 W vorgesehen. Die vorgesehene Brattemperatur im Topf kann dabei bis zu 250°C betragen. Bei derart hohen Leistungen ist es notwendig, den Boden eines solchen Topfes zu optimieren.

### Der Erfindung zugrundeliegende Aufgabe

Aufgabe der Erfindung ist es daher, ein verbessertes Topfbodenmodul für eine Küchenmaschine zur Verfügung zu stellen, insbesondere ein Topfmodul, welches hohe Heizleistungen bei Plattendurchmessern zwischen 10 cm und 20 cm zur Verfügung stellen kann, ohne dass sich Heißstellen und Kaltstellen bilden.

### Erfindungsgemäße Lösung

Die Bezugszeichen in sämtlichen Ansprüchen haben keine einschränkende Wirkung, sondern sollen lediglich deren Lesbarkeit verbessern.

Die erfindungsgemäße Aufgabe wird dadurch gelöst, dass die mindestens eine Widerstandsheizungswendel unterhalb des Topfbodens angeordnet ist, wobei die mindestens eine Widerstandsheizungswendel in einer Platte aus Aluminium angeordnet ist, welche die mindestens eine Widerstandsheizungswendel formschlüssig zumindest teilweise umschließt und formschlüssig mit dem Topfboden verbunden ist. Vorteilhafte Aus- und Weiterbildungen, welche einzeln oder in Kombination miteinander eingesetzt werden können, sind Gegenstand der abhängigen Ansprüche und der nachfolgenden Beschreibung.

Nach dem Gedanken der Erfindung ist also vorgesehen, unterhalb der in der Regel blechdünnen Edelstahlbodenplatte des Topfes in der Küchenmaschine eine Platte aus Aluminium vorzusehen. Die Platte aus Aluminium verteilt die Wärme aus den Heizelementen gleichmäßig über die Bodenplatte, so das Heißstellen (hot spots) und Kaltstellen (cold spots) vermieden werden. Der Gedanke ist, unter der Topfbodenplatte eine Platte vorzusehen, deren Wärmeleitfähigkeit deutlich größer ist als die Wärmeleitfähigkeit der Topfbodenplatte. Die höhere Wärmeleitfähigkeit kann hergestellt werden durch ein größeres Volumen der Platte, um den Wärmewiderstand zu verringern. Dabei sollte die Wärmekapazität nicht zu groß werden, um zu vermeiden, dass die Regelung der Topftemperatur kein Glied in der Regelschleife enthält, die zu einer langen Nachlaufzeit führt. In Ausgestaltung der Erfindung kann daher vorgesehen sein, dass der Topfboden (aus Edelstahl besteht und dünner ist als die Platte aus Aluminium.

Durch das Anordnen des Heizelements, d.h. der Widerstandsheizungswendel, in der Aluminiumplatte kann eine innige Materialverbindung bereitgestellt werden, welche fast einer Einstückigkeit entspricht. Somit kann eine homogene Hitzeverteilung gewährleistet werden, bei Vermeidung von Kaltstellen aber auch von Hot-Spots im Betrieb des Küchengeräts. Durch die verhältnissmäßig dickere Aluminiumplatte können besonders hohe Temperaturen erreicht werden, und weiter kann eine Trägheit des Kochens erreicht werden, welches bei der Zubereitung von Speisen, insbesondere während Bratvorgängen, sich als sehr vorteilhaft herausgestellt hat. Das Topfbodenmodul ist kompakt in seiner Bauweise und kann trotzdem durch die innige Materialverbindung zwischen Heizelement und Aluminiumplatte eine hohe Wärmespeicherfähigkeit aufweisen.

Auch vorstellbar ist die Anordnung eines Wärmeschilds unterhalb des Heizelementanordnung zur Wärmeisolation der elektrischen Kontaktierung des Topfbodenmoduls. Dieses Schild könnte vorteilhaft in der Aluminiumplatte integral implementiert werden, so dass der kompakte Aufbau weiterhin bestehen bleibt.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

In einer Variante des Topfbodenmoduls kann vorgesehen sein, dass die elektrische Anschlussleistung der mindestens eine Widerstandsheizungswendel oder die gemeinsame elektrische Anschlussleistung von mehr als einer Widerstandsheizungswendel zwischen 800 W und 2.000 W beträgt. Bei einem Topfbodendurchmesser zwischen 10 cm und 20 cm ergeben sich typische Wärmeströme von ca. 2,67 W/cm² bei 800 W auf einer Oberfläche von ca. 300 cm² (ø=20 cm) bis ca. 26,67 W/cm² bei 2.000 W auf einer Oberfläche von 75 cm² (ø=10 cm). Durch die erfindungsgemäße Anordnung ist es möglich, die höheren Heizleistungen gleichmäßig auf das Kochgut am Topfboden zu übertragen.

Um einen möglichst widerstandsarmen Wärmeübergang zwischen Heizelement und der Platte aus Aluminium herzustellen, kann ist Ausgestaltung des Topfbodenmoduls vorgesehen sein, dass zwischen der mindestens einen Widerstandsheizungswendel und der Platte aus Aluminium Wärmeleitpaste vorhanden ist.

Für eine gleichmäßige Verbindung zwischen der Platte aus Aluminium und dem Topfboden kann es vorgesehen sein, dass der Topfboden und die Platte aus Aluminium miteinander verlötet sind. Für eine gleichmäßige Verlötung ohne kalt Lötflächen und damit einen gleichmäßigen Wärmeübergang kann das Löten in einem Ofen geschehen. Es ist auch möglich, die Verlötung über eine speziell zu diesem Zweck vorgesehene Induktionsplatte oder Induktionsanordnung durchzuführen.

Für eine elektrische Isolierung der mindestens einen Widerstandsheizungswendel kann vorgesehen sein, dass die mindestens eine Widerstandsheizungswendel in einer elektrisch isolierenden Keramik aufgenommen ist. Schließlich kann in einer besonderen Ausführungsform des Topfbodenmoduls vorgesehen sein, dass in der Platte aus Aluminium des Weiteren mindestens ein Thermo-Schalter oder Thermo-Element oder allgemein ein Temperaturgeber angeordnet ist. Der Thermoschalter oder das Thermoelement kann als Wärmedetektor verwendet werden für einen Überhitzungsschutz aber auch als Temperaturdetektor für eine Temperaturregelung der Topfbodenplatte.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt:
- Fig. 1: eine perspektivische Ansicht auf die Unterseite des erfindungsgemäßen Topfbodenmoduls für eine Küchenmaschine,
- Fig. 2: eine Seitenansicht auf einen Gartopf einer Küchenmaschine.

Bei der nachfolgenden Beschreibung von bevorzugten Ausführungsformen der vorliegenden Erfindung bezeichnen gleiche Bezugszeichen gleiche oder vergleichbare Komponenten.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

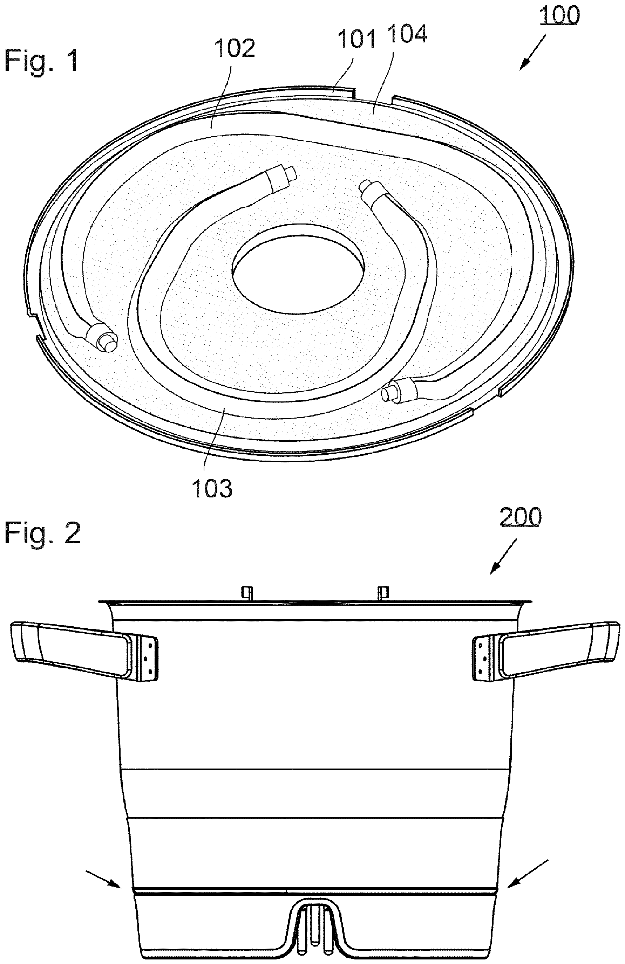

In **Figur 1** ist eine perspektivische Ansicht auf die Unterseite des erfindungsgemäßen Topfbodenmoduls 100 für eine Küchenmaschine dargestellt. Das Topfbodenmodul 100 wird für den Einsatz fest mit einem Gartopf als Boden verbunden. Das erfindungsgemäße Topfbodenmodul 100 für eine Küchenmaschine weist einen Topfboden 101 auf. Dieser ist in dieser Ansicht zuunterst dargestellt. In der Regel besteht das Material des Topfbodens 101 aus nickelhaltigem Edelstahl, der besonders lebensmittelkompatibel ist und sich leicht reinigen lässt. Unter dem Topfboden 101, in dieser Zeichnung aufgrund der Umkehr auf dem Topfboden 101, befinden sich zwei Widerstandsheizungswendeln 102, 103, die in einer Keramik zur Isolation gegen elektrischen Strom. Die Widerstandsheizungswendeln 102, 103 können dabei fest in einem Keramikrohling aufgenommen sein, darin eingesintert sein oder aber in einer kettenartigen Struktur aus Keramikringen aufgenommen sein.

Nach dem Gedanken der Erfindung ist vorgesehen, dass die mindestens eine Widerstandsheizungswendel 102, 103 in einer Platte 104 aus Aluminium angeordnet ist, welche die mindestens eine Widerstandsheizungswendel 102, 103 formschlüssig zumindest teilweise umschließt und formschlüssig mit dem Topfboden 101 verbunden ist. Der Formschluss stellt sicher, dass die Wärme der Widerstandsheizungswendeln 102, 103 widerstandsarm zunächst in die Platte 104 aus Aluminium übergeht, und vor dort widerstandsarm auf den Topfboden 101 übergeht. In der hier gezeigten Ausführungsform ist die Platte 104 dicker als der Topfboden 101, der selbst aus Edelstahl besteht und dünner ist als die Platte 104 aus Aluminium.

Zwischen der mindestens einen Widerstandsheizungswendel 102, 103 und der Platte 104 aus Aluminium Wärmeleitpaste ist hier, nicht skizziert, eine Wärmeleitpaste eingefügt. Diese überträgt die Wärme von der Keramik der Widerstandsheizungswendeln 102, 103 auf die Platte 104 aus Aluminium.

Des Weiteren befinden sich in der Platte 104 aus Aluminium noch drei Thermo-Schalter oder Thermo-Elementen als Detektor für einen Überhitzungsschutz oder als Detektor für eine Regelstrecke zur Leistungs- und/oder Temperaturregelung.

In **Figur 2** ist eine Seitenansicht auf einen Gartopf einer Küchenmaschine gezeigt. Häufig weist ein solcher Topf einen geringeren Durchmesser am Topfboden 101 auf als an der Topföffnung, wobei der Durchmesser des Bodens zwischen 10 cm und 20 cm beträgt. Der Topfboden 101 wird, wie in Figur 2 durch Pfeile hervorgehoben ist, unter den Topf als Topfboden 101 angeordnet und verschweißt. Unterhalb des Topfbodens 101 befinden sich noch elektrische Anschlussaggregate und gegebenenfalls mechanische Elemente zum befestigen des Topfes in der Küchenmaschine und zum Übertragen der Drehbewegung eines Rühr und Zerkleinerungswerks. Das Topfbodenmodul für diesen Topf weist eine elektrische Anschlussleistung der mindestens einen Widerstandsheizungswendel 102, 103 zwischen 800 W und 2.000 W auf. In dem hier gezeigten Topf ist der Topfboden 101 mit dem Rest des Topfes verschweißt. Hingegen sind der Topfboden 101) und die Platte 104 aus Aluminium miteinander verlötet.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

Das Topfmodul kann bei Plattendurchmessern zwischen 10 cm und 20 cm, eine besonders hohe Heizleistung zur Verfügung stellen, ohne dass sich Heißstellen und Kaltstellen bilden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

**BEZUGSZEICHENLISTE**

| | | | |
|---|---|---|---|
| 100 | Topfbodenmodul | 104 | Platte |
| 102 | Widerstandsheizungswendel | 105 | Thermo-Schalter / Thermo-Element |
| 103 | Widerstandsheizungswendel | | |

## Patentansprüche

1. Topfbodenmodul (100) für eine Küchenmaschine, aufweisend
- einen Topfboden (101), und
- mindestens eine Widerstandsheizungswendel (102, 103),
**dadurch gekennzeichnet, dass**
die mindestens eine Widerstandsheizungswendel (102, 103) unterhalb des Topfbodens (101) angeordnet ist, wobei
die mindestens eine Widerstandsheizungswendel (102, 103) in einer Platte (104) aus Aluminium angeordnet ist, welche die mindestens eine Widerstandsheizungswendel (102, 103) formschlüssig zumindest teilweise umschließt und formschlüssig mit dem Topfboden (101) verbunden ist.

2. Topfbodenmodul nach Anspruch 1,
**dadurch gekennzeichnet, dass**
der Topfboden (101) aus Edelstahl besteht und dünner ist als die Platte (104) aus Aluminium.

3. Topfbodenmodul nach einem der Ansprüche 1 oder 2,
**dadurch gekennzeichnet, dass**
die elektrische Anschlussleistung der mindestens einen Widerstandsheizungswendel (102, 103) oder die gemeinsame elektrische Anschlussleistung von mehr als einer Widerstandsheizungswendel (102, 103) zwischen 800 W und 2.000 W beträgt.

4. Topfbodenmodul nach einem der Ansprüche 1 oder 2,
**dadurch gekennzeichnet, dass**
zwischen der mindestens einen Widerstandsheizungswendel (102, 103) und der Platte (104) aus Aluminium Wärmeleitpaste vorhanden ist.

5. Topfbodenmodul nach einem der Ansprüche 1 bis 4,
**dadurch gekennzeichnet, dass**
der Topfboden (101) und die Platte (104) aus Aluminium miteinander verlötet sind.

6. Topfbodenmodul nach einem der Ansprüche 1 bis 5,
**dadurch gekennzeichnet, dass**
die mindestens eine Widerstandsheizungswendel (102, 103) in einer elektrisch isolierenden Keramik aufgenommen ist.

7. Topfbodenmodul nach einem der Ansprüche 1 bis 4,
**dadurch gekennzeichnet, dass**
in der Platte (104) aus Aluminium des Weiteren mindestens ein Thermo-Schalter (105), Thermo-Element (105) oder allgemein ein Temperaturgeber angeordnet ist.

8. Topfbodenmodul nach mindestens einem der vorhergehenden Ansprüche,
**dadurch gekennzeichnet, dass das** mindestens eine Widerstandsheizungswendel (102, 103) als Rohrheizung ausgebildet ist.
